# EUROPEAN PATENT APPLICATION

(11) **EP 4 685 634 A1**
(43) Date of publication of application: **28.01.2026**
(21) Application number: 25180096.7
(22) Date of filing: 02.06.2025
(51) Int. Cl.: G06F 9/4401, G06F 12/02, G06F 9/50, G06F 12/084, G06F 12/0862, G06F 12/10

(54) **SERVER FAST BOOT USING CACHE-COHERENT INTERCONNECT MEMORY**

(30) Priority: 24.07.2024 US 202418783142
(71) Applicant: Microsoft Technology Licensing, LLC, Redmond, WA 98052 (US)
(72) Inventor: HODIGERE, ARUN VENKATASUBBAIAH, Redmond, Washington, 98052 (US); GARG, ANKUR, Redmond, Washington, 98052 (US); KOTARY, KARUNAKARA, Redmond, Washington, 98052 (US); YARLAGADDA, SATYA PRASAD, Redmond, Washington, 98052 (US)
(74) Representative: CMS Cameron McKenna Nabarro Olswang LLP

(57) **Abstract**

Systems and methods are provided for implementing server fast boot using cache-coherent interconnect memory. A cache-coherent interconnect node partitions a memory pool and pre-allocates a memory region of the memory pool to each compute node of a plurality of compute nodes. A basic input/output system ("BIOS") of a compute node maps a local memory of the compute node to a memory region that has been pre-allocated to the compute node. The BIOS boots an operating system ("OS") of the compute node in the memory region. Concurrent with the OS executing workloads using the memory region, the BIOS trains and initializes the local memory, after completion of which the BIOS notifies the OS that the local memory is ready. The OS migrates contents from the memory region to the local memory, and subsequently executes the workload from the local memory or a combination of the local memory and the memory region.

## Description

### BACKGROUND

In data centers, server reboots, although infrequent, may occur due to certain situations, such as critical firmware updates and disaster recovery from power loss. Periodic restarts are implemented to account for such situations. These server reboots are often used as an opportunity to retrain server memory. However, any downtime due to server rebooting and due to retraining server memory affects system operations and compute or memory capacity of the data centers involved. It is with respect to this general technical environment to which aspects of the present disclosure are directed. In addition, although relatively specific problems have been discussed, it should be understood that the examples should not be limited to solving the specific problems identified in the background.

### SUMMARY

This summary is provided to introduce a selection of concepts in a simplified form that are further described below in the detailed description section. This summary is not intended to identify key features or essential features of the claimed subject matter, nor is it intended as an aid in determining the scope of the claimed subject matter.

The currently disclosed technology, among other things, provides for server fast boot using cache-coherent interconnect memory. In examples, a cache-coherent interconnect node is communicatively coupled via cache-coherent interconnect links with each compute node of a plurality of compute nodes. The cache-coherent interconnect links are pretrained, and the cache-coherent interconnect node partitions a memory pool into a plurality of memory regions and pre-allocates a memory region among the plurality of memory regions to each compute node. A basic input/output system ("BIOS") of a compute node configures a system address memory table associated with an operating system ("OS") of the compute node, by mapping a local memory of the compute node to a memory region among the plurality of memory regions that has been pre-allocated to the compute node. The BIOS boots the OS in the memory region, and the OS executes workloads of the compute node using the memory region. Concurrent with the OS executing workloads of the compute node using the memory region, the BIOS trains and initializes the local memory of the compute node. After training and initialization of the local memory have been completed, the BIOS notifies the OS that the local memory is ready to handle workload execution and is ready for migration of contents of the memory region to the local memory. The OS migrates the contents from the memory region to the local memory, and subsequently executes the workload from either the local memory or a combination of the local memory and the memory region. In this manner, local memory of the compute nodes is trained and initialized, thus ensuring optimal operation of the compute nodes, without affecting workload execution. From the perspective of a requesting device or entity, there is no interruption in the workloads being executed by the OS on its behalf.

The details of one or more aspects are set forth in the accompanying drawings and description below. Other features and advantages will be apparent from a reading of the following detailed description and a review of the associated drawings. It is to be understood that the following detailed description is explanatory only and is not restrictive of the invention as claimed.

### BRIEF DESCRIPTION OF THE DRAWINGS

A further understanding of the nature and advantages of particular embodiments may be realized by reference to the remaining portions of the specification and the drawings, which are incorporated in and constitute a part of this disclosure.
Fig. 1 depicts an example system for implementing server fast boot using cache-coherent interconnect memory.
Figs. 2A and 2B depict various example sequence flows for implementing server fast boot using cache-coherent interconnect memory.
Figs. 3A and 3B depict an example method for implementing server fast boot using cache-coherent interconnect memory.
Fig. 4 depicts another example method for implementing server fast boot using cache-coherent interconnect memory.
Fig. 5 depicts a block diagram illustrating example physical components of a computing device with which aspects of the technology may be practiced.

### DETAILED DESCRIPTION OF CERTAIN EMBODIMENTS

Although server reboots are infrequent in data centers, certain situations such as critical firmware updates and disaster recovery from power loss necessitate periodic restarts, typically once every six months. Many cloud providers use these server restarts as an opportunity to retrain memory. However, as memory technology advances, such as with the introduction of double data rate ("DDR") 5 or 6 or higher, and as a system-on-a-chip ("SOC") technology adds more memory channels, DDR memory training has become a significant factor in boot time. Despite CPUs having multiple memory channels that can theoretically be trained in parallel, concerns, such as power droop (e.g., a drop in overall power to the SOC such as due to multiple parallel processes performed by SOC components like multiple CPU cores), limit parallel training to 2 - 4 memory controllers. For example, on a 2-socket CPU design with 12-channel DDR memory, even with parallel memory initialization, the time required is around 10 - 12 minutes and increases as the number of memory channels increases. Extrapolating this time to a 100,000-node data center with 2 reboots, the data center loses the total cost of operation benefits of about 2 million minutes of cumulative compute time due to memory training time.

The present technology provides for server fast boot using cache-coherent interconnect memory. In examples, cache-coherent interconnect memory is used for OS boot, parallel training of local compute node memory, and/or entire host partition motherboard ("HPM") firmware boot. During cache-coherent interconnect node power-up, cache-coherent interconnect links are pretrained, and the cache-coherent interconnect node pre-allocates some memory from a shared cache-coherent interconnect memory pool to compute nodes (or servers), which, in some cases, are disposed within the same equipment rack. The BIOS of a compute node or a silicon controller-hosted memory initialization code runs basic enumeration of local memory (e.g., DDR memory), checks local memory health, and constructs an address map, using the address of the cache-coherent interconnect memory, with the cache-coherent interconnect memory serving as redundant memory, backup memory, and/or supplemental memory. The BIOS firmware can boot an OS from a preboot execution environment ("PXE") or from a local drive. As used herein, PXE refers to a set of standards that enables a compute to load an OS over a network connection. As described herein, the BIOS (or a SOC controller for memory initialization) performs local memory training in the background while the system BIOS firmware boot proceeds using the cache-coherent interconnect memory (e.g., via PXE boot from the cache-coherent interconnect memory). A platform runtime mechanism ("PRM") API is called by the OS to establish a synchronization point (or "sync point") for the BIOS firmware to ensure that all local memory devices are trained and to ensure that a context of the OS or BIOS is copied from cache-coherent interconnect memory to the local memory to release the cache-coherent interconnect memory. In the manner described above, the entire process of local memory training is delayed and hidden behind the BIOS boot, the PXE boot, or early part of the OS boot. Further, boot time to the OS is improved (especially in Very High Memory ("VHM") configurations in which the system expects significant use of memory due to high volume data processing for data-intensive workloads or tasks), as is the response time to workloads performed by the OS.

Various modifications and additions can be made to the embodiments discussed herein without departing from the scope of the disclosed techniques. For example, while the embodiments described above refer to particular features, the scope of the disclosed techniques also includes embodiments having different combinations of features and embodiments that do not include all of the above-described features.

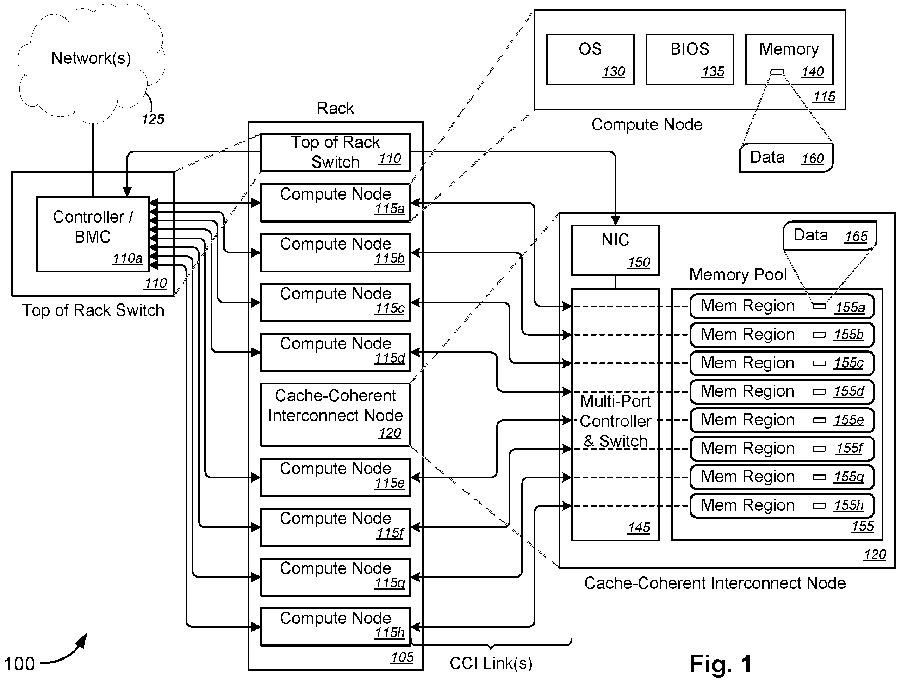

Turning to the embodiments as illustrated by the drawings, Figs. 1-5 illustrate some of the features of methods, systems, and apparatuses for implementing server fast boot using cache-coherent interconnect memory, as referred to above. The methods, systems, and apparatuses illustrated by Figs. 1-5 refer to examples of different embodiments that include various components and steps, which can be considered alternatives or which can be used in conjunction with one another in the various embodiments. The description of the illustrated methods, systems, and apparatuses shown in Figs. 1-5 is provided for purposes of illustration and should not be considered to limit the scope of the different embodiments.

Fig. 1 depicts an example system 100 for implementing server fast boot using cache-coherent interconnect memory. System 100 includes a rack 105, a top of rack ("ToR") switch 110, a plurality of compute nodes 115a-115h ((collectively, "compute nodes 115"), a cache-coherent interconnect node 120 (e.g., a compute express link ("CXL") node, a coherent accelerator processor interface ("CAPI") device, a cache coherence interconnect for accelerators ("CCIX") device), and a network(s) 125. The ToR switch 110, the compute nodes 115, and the cache-coherent interconnect node 120 are disposed on the rack 105 (also referred to as an "equipment rack"), which is disposed in a data center or other service provider facility. The ToR switch 110 includes a controller 110a, such as a baseboard management controller ("BMC"). Each compute node 115 includes an OS 130, a BIOS 135, and memory 140 (also referred to herein as "local memory"). The cache-coherent interconnect node 120 includes a multi-port controller and switch 145 (also referred to herein as "controller 145" or "cache-coherent interconnect controller 145"), a network interface card ("NIC") 150, and a memory pool 155 (also referred to herein as "shared memory 155" or "cache-coherent interconnect memory 155"). The controller 145 is communicatively coupled with each of the compute nodes 115 (as denoted in Fig. 1 by the double-headed arrows (referred to herein as "cache-coherent interconnect links" or "CCI link(s)") between the controller 145 and each compute node 115). The cache-coherent interconnect node 120 implements cache-coherent interconnect specifications that allow for a memory pooling architecture in which the memory pool 155 can be shared by the compute nodes 115a-115h in the rack 105. The controller 145 enforces hardware cache coherency, which allows the compute nodes 115a-115h in the rack 105 to have a coherent copy of the shared memory (e.g., memory pool 155).

The memory pool 155 is partitioned into a plurality of memory regions 155a-155h each pre-allocated to one of the plurality of compute nodes 115a-115h (as denoted in Fig. 1 by the dashed line between each memory region 155a-155h and a corresponding cache-coherent interconnect link connecting a corresponding compute node 115 to the controller 145). In some examples, the memory pool 155 is formed from or includes a plurality of memory devices that are pooled together. In examples, the plurality of memory devices includes at least one of a random access memory ("RAM"), a static RAM ("SRAM"), a dynamic RAM ("DRAM"), a synchronous dynamic RAM ("SDRAM"), a DDR memory, a graphics DDR ("GDDR") memory, or a GDDR SDRAM. In some examples, memory 140 includes at least one of a plurality of dual in-line memory modules ("DIMMs") or a plurality of DDR memory devices. In examples, such as for specialized jobs like In-Memory Databases ("IMDB"), the compute nodes 115 can support VHM configurations, including 8 - 12 memory channels each supporting one or two DIMMs, with a DIMM size between about 128 and about 512 gigabytes (GB) for a total memory size of about 2 - 12 terabytes (TB) per compute node 115.

The controller 110a (e.g., BMC) communicatively couples with each of the compute nodes 115 (as depicted in Fig. 1 by the double-headed arrows between the controller 110a and each compute node 115). The controller 110a also communicatively couples with the cache-coherent interconnect node 120, via NIC 150 (as denoted by the double-headed arrow between the controller 110a and the NIC 150 through the ToR switch 110). The controller 110a further communicatively couples with network(s) 125, in some cases, with a compute fabric, a control plane, an orchestrator and/or data center control services, via network(s) 125. Network(s) 125 each includes at least one of a distributed computing network, such as the Internet, a private network, a commercial network, or a cloud network, and/or the like.

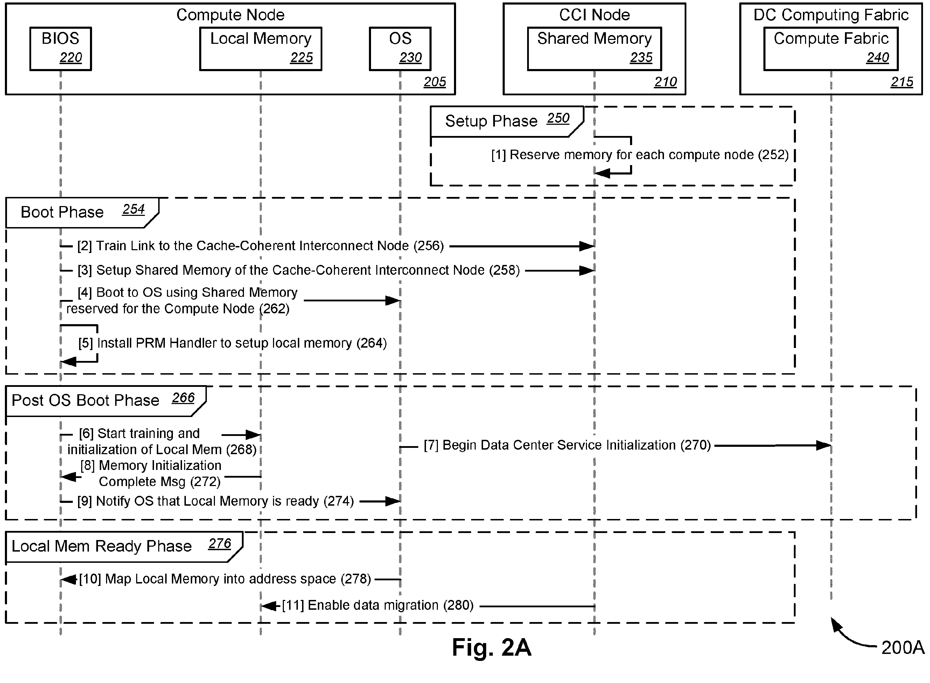

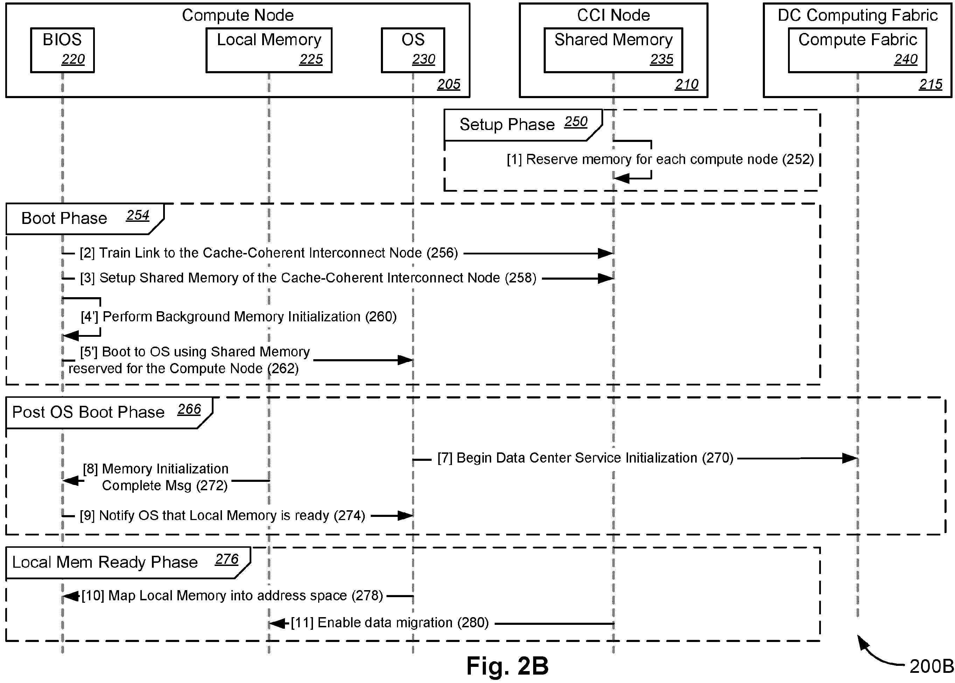

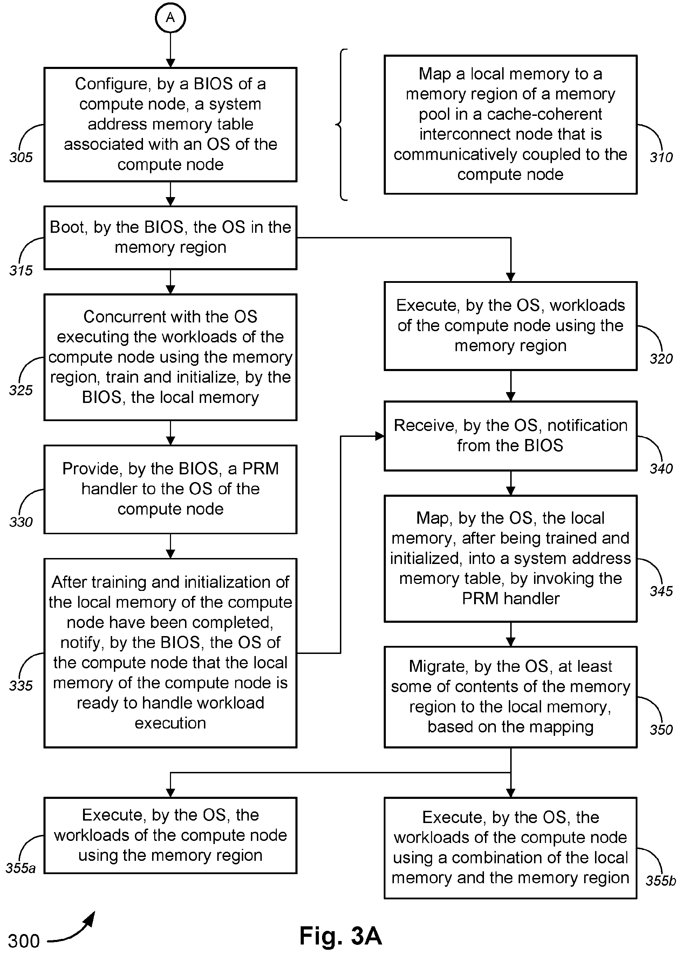

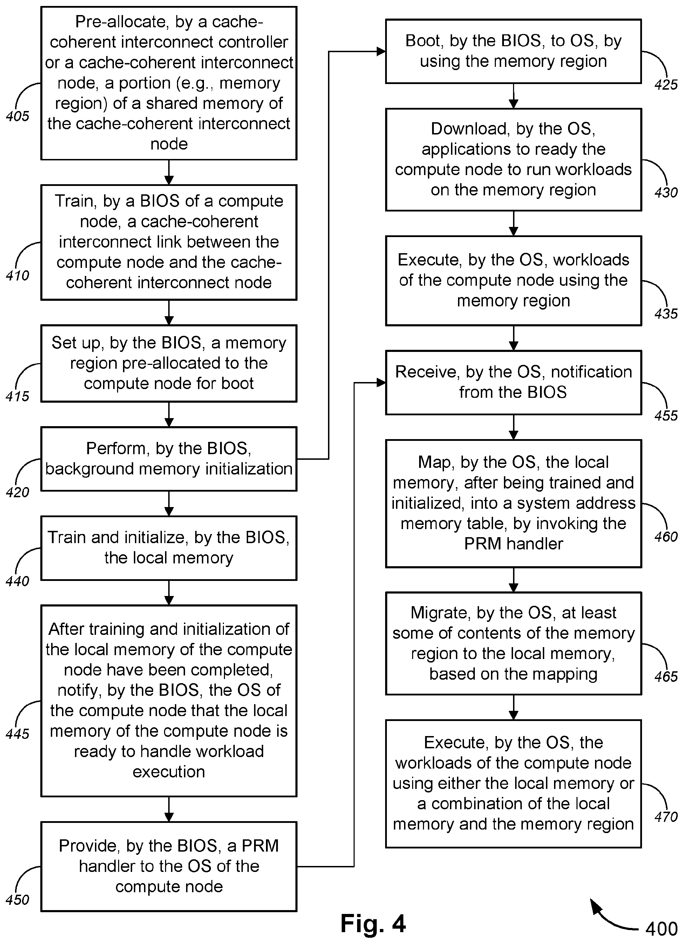

In operation, OS 130 and BIOS 135 of one or each of compute nodes 115 and the controller 145 of cache-coherent interconnect node 120 may perform methods for implementing server fast boot using cache-coherent interconnect memory, as described in detail with respect to Figs. 2-4. For example, example sequence flows 200A and 200B as described below with respect to Figs. 2A and 2B, and example methods 300 and 400 as described below with respect to Figs. 3A-3B and 4, respectively, may be applied with respect to the operations of system 100 of Fig. 1. Herein, although the various embodiments refer to use of a BIOS, the various embodiments are not so limited, and unified extensible firmware interface ("UEFI") may be used instead. UEFI, as used herein, refers to a specification that defines architecture of a platform firmware that is used for booting computer hardware and its interface for interaction with an OS, or refers to the interface itself.

In some aspects, a BIOS 135 of a compute node 115 configures a first system address memory table associated with an OS 130 of a first compute node (e.g., compute node 115a). In some examples, configuring the first system address memory table is performed by mapping the local memory (e.g., memory 140) of the first compute node to a first memory region (e.g., memory region 155a) among the plurality of memory regions of the memory pool 155, the first memory region 155a being pre-allocated to the first compute node 115a. The BIOS 135 boots the OS 130 of the first compute node in the first memory region 155a, in some cases, by booting from a PXE at the first memory region 155a. After booting in the first memory region 155a, the OS 130 can subsequently execute workloads assigned to the first compute node 115a using the first memory region 155a instead of using local memory 140. In examples, data 160 in the local memory 140 that is needed for the OS 130 to operate and for the workloads to properly execute are migrated (e.g., copied or moved) to the first memory region 155a as saved as data 165. In some examples, the workloads include at least one of a general computing task (e.g., general data processing or general computing), a cloud computing task (e.g., a large-scale data processing or computing task, or a virtual machine task), a gaming task (e.g., graphics processing and game engine tasks), or an artificial intelligence ("AI") processing task (e.g., natural language processing tasks (e.g., large language model or small language model tasks), computer vision tasks, content generation tasks, machine learning tasks, conversion between one of text, speech, image, video, or code to another of text, speech, image, video, or code). Concurrent with the OS 130 of the first compute node 115a executing workloads of the first compute node 115a using the first memory region 155a, the BIOS 135 trains and initializes the local memory 140 of the first compute node 115a. For initialization, the BIOS 135 (in some cases, using a memory initialization code, such as a silicon controller-hosted memory initialization code) runs basic enumeration of local memory 140 (e.g., DDR memory), checks a health condition of the local memory 140, and constructs an address map, using the address of the corresponding memory region among memory regions 155a-155h, with the memory region serving as redundant memory, backup memory, and/or supplemental memory.

In examples, training and initialization of the local memory 140 are performed during reboot of the first compute node for one of firmware updates, disaster recovery from power loss, or after restart of the first compute node. In the case of firmware updates (such as updates to an entire HPM firmware), rebooting of the entire HPM firmware also occurs concurrent with training and initialization of the local memory and/or concurrent with OS boot and OS execution of workloads. In some examples, each compute node 115 further includes a plurality of compute cores, where a majority of compute cores are used by the OS 130 to perform its operations (e.g., executing workloads, migrating data between local memory and shared memory) while some of the compute cores are used by the BIOS 135 to perform its operations (e.g., configuring the system address memory table of each OS, booting the OS in the corresponding memory region of the memory pool, and/or training and initializing the local memory of each compute node). In examples, when the BIOS 135 uses some of the compute cores to perform its operations, it notifies the OS 130 that it is doing so, to avoid errors or alerts being raised when the OS 130 detects that it is using computing capacity that is less than an amount provided by the plurality of compute cores.

After training and initialization of the local memory 140 of the first compute node 115a have been completed, the BIOS 135 notifies the OS 130 of the first compute node 115a that the local memory 140 of the first compute node 115a is ready to handle workload execution and is ready for migration of contents (e.g., data 165) of the first memory region 155a to the local memory 140 of the first compute node 115a. In examples, the BIOS 135 provides a PRM handler to the OS 130, either before, while, or after, notifying the OS 130 that the local memory 140 is ready to handle workload execution and is ready for migration of contents from the first memory region 155a. After being notified by the BIOS 135 of the first compute node 115a, the OS 130 maps the local memory 140 of the first compute node 115a, after being trained and initialized, into the first system address memory table, in some cases, by invoking the PRM handler. The OS 130 migrates the contents (e.g., data 165) of the first memory region 155a to the local memory 140 of the first compute node 115a (e.g., as data 160), based on the mapping. The OS 130 subsequently executes the workloads of the first compute node 115a using either the local memory 140 or a combination of the local memory 140 and the memory region 155a.

In some other aspects, a cache-coherent interconnect node 120 (e.g., a CXL node) is configured to pre-allocate memory pool 155 (e.g., CXL memory or shared memory) to each compute node 115 in its rack 105. In examples, pre-allocation of memory regions 155a-155h of the memory pool 155 is based on an identifier ("ID") of each compute node 115, where each compute node 115a-115h has a pre-allocated memory region 115a-115h that it can access in the cache-coherent interconnect node 120 using its compute node ID. For example, a first compute node 115a (with node ID 1) is pre-allocated a first memory region 155a have memory addresses 0 - 8 GB, while a second compute node 115b (with node ID 2) is pre-allocated a second memory region 155b have memory addresses 8 - 16 GB, through an *H^{th}* compute node 115h (with node ID H) is pre-allocated an *H^{th}* memory region 155h have memory addresses (8×(*H*-1)) - 8×*H* GB. Here, *H* is any suitable non-negative integer value. Each compute node 115 is connected to the cache-coherent interconnect node 120 via a cache-coherent interconnect link (e.g., CXL link). During a power up of a compute node, that compute node first trains all the cache-coherent interconnect links connected to its CPU(s), including a cache-coherent interconnect to the cache-coherent interconnect node 120. In examples, a new BIOS setup option (compared with conventional BIOS setup option) is introduced or provided that, when selected, causes the BIOS 135 to skip local memory (e.g., local DDR memory) if a cache-coherent interconnect node 120 is available in the rack 105 and/or is detected by the compute node 115. The BIOS 135 sets up the system address memory table for the CPU to map to the pre-allocated memory region (e.g., one of memory regions 155a-155h) in the cache-coherent interconnect node 120. The BIOS 135 uses the pre-allocated memory region to complete BIOS programming and to enable OS boot. The OS 130 connects to data center control services (e.g., via controller 110a and network(s) 125) to begin a process of downloading several applications to ready the compute node 115 to run workloads for requesting devices or entities. This process typically takes several minutes, during which the OS 130 operates from the pre-allocated memory region. In parallel, the BIOS 135 begins to train the local memory. Once local memory training and initialization is complete, the BIOS 135 informs the OS 130 via an interrupt mechanism. The BIOS 135 provides the OS with a PRM handler that enables mapping the newly trained local memory into the system address memory table of the CPU. When the OS 130 is ready, the OS 130 invokes the PRM handler to map to the local memory. The OS 130 then migrates data (e.g., data 165) from the memory region to the local memory for faster performance. From the perspective of the requesting devices or entities, there is no interruption in the workloads being executed by the OS, despite the local memory being trained and initialized, due to the operation on the pre-allocated memory region in the cache-coherent interconnect node. This is in contrast to conventional systems, where, due to the local memory being out of operation for training and initialization, the requesting devices or entities would experience significant delays in the execution of the workloads.

Figs. 2A and 2B depict various example sequence flows 200A and 200B for implementing server fast boot using cache-coherent interconnect memory. In Figs. 2A and 2B, a compute node 205 interacts with a cache-coherent interconnect node 210 and a data center ("DC") computing fabric 215. The compute node 205 includes a BIOS 220, a local memory 225, and an OS 230. The cache-coherent interconnect node 210 includes a shared memory 235. The DC computing fabric 215 includes a compute fabric 240. In some embodiments, compute node 205, BIOS 220, local memory 225, OS 230, cache-coherent interconnect node 210, and shared memory 235 of Figs. 2A and 2B may be similar, if not identical, to the compute nodes 115a-115h, BIOS 135, memory 140, OS 130, cache-coherent interconnect node 120, and memory pool 155 or memory regions 155a-155h, respectively, of system 100 of Fig. 1, and the description of these components of system 100 of Fig. 1 are similarly applicable to the corresponding components of Figs. 2A and 2B.

With reference to example sequence flow 200A of Fig. 2A, at setup phase 250, cache-coherent interconnect node 210 reserves or pre-allocates a portion of memory from shared memory 235 for each compute node 205 (at operation 252, denoted by process "[1]" in Fig. 2A). At boot phase 254, BIOS 220 trains a cache-coherent interconnect link(s) between the compute node 205 and the cache-coherent interconnect node 210 (at operation 256, denoted by process "[2]" in Fig. 2A). Also at boot phase 254, BIOS 220 sets up the pre-allocated portion of memory from shared memory 235 of the cache-coherent interconnect node 210 for the compute node 205 (at operation 258, denoted by process "[3]" in Fig. 2A). In examples, setting up the pre-allocated portion of memory is performed by setting up a system address memory table associated with a CPU of the compute node 205 to map to the pre-allocated portion of memory. In some examples, if the shared memory 235 (or more specifically the pre-allocated portion or memory) is available for the compute node 205, the BIOS 220 is configured to skip local memory 225 for booting to OS 230, especially where local memory 225 requires training and initialization. At boot phase 254, BIOS 220 also boots to OS 230 using the pre-allocated portion of memory of shared memory 235 reserved for the compute node 205 (at operation 262, denoted by process "[4]" in Fig. 2A), in some cases, by booting from a PXE at the pre-allocated portion of memory. Further at boot phase 254, BIOS 220 installs a PRM handler or an application programming interface ("API") to set up or initialize local memory 225 (at operation 264, denoted by process "[5]" in Fig. 2A).

At post OS boot phase 266, BIOS 220 starts training and initialization of local memory 225 (at operation 268, denoted by process "[6]" in Fig. 2A). Meanwhile, also at post OS boot phase 266, OS 230, operating from the pre-allocated portion of memory in shared memory 235, begins data center service initialization by connecting to data center control services via compute fabric 240 of DC computing fabric 215 to begin downloading applications to make the compute node 205 ready to run workloads for requesting devices or entities (at operation 270, denoted by process "[7]" in Fig. 2A). At post OS boot phase 266, local memory 226 sends a memory initialization complete message to BIOS 220 (at operation 272, denoted by process "[8]" in Fig. 2A). Further at post OS boot phase 266, BIOS 220 notifies OS 230 that local memory 225 is ready to handle workload execution and is ready for migration of contents from shared memory 235 (at operation 274, denoted by process "[9]" in Fig. 2A).

At local memory ready phase 276, the OS 230 maps local memory 225 into an address space in system address memory table associated with OS 230 (at operation 278, denoted by process "[10]" in Fig. 2A), in some cases, by invoking the PRM handler installed at operation 264 (or process [5] at the boot phase 254). In some examples, invoking the PRM handler includes calling a PRM API. The PRM handler, when invoked, establishes a sync point for the BIOS to ensure that all local memory devices across the plurality of compute nodes are trained and to ensure that, for each compute node, a context of the OS or BIOS (e.g., data or content) is copied from a corresponding memory region of the shared memory 235 to the local memory 225 to release that memory region of the shared memory 235. Also at local memory ready phase 276, the cache-coherent interconnect node 210 enables data migration to the local memory 225 (at operation 280, denoted by process "[11]" in Fig. 2A). In examples, the data migration at operation 280 (or process [11]) is initiated or managed by OS 230.

Referring to Fig. 2B, the example sequence flow 200B of Fig. 2B is similar, if not identical to the example sequence flow 200A of Fig. 2A, except that, at boot phase 254, BIOS 220 performs background memory initialization (at operation 260, denoted by process "[4']" in Fig. 2B), followed by BIOS 220 booting to OS 230 using shared memory 235 reserved for the compute node 205 (at operation 262, denoted by process "[4]" in Fig. 2A and by process "[5']" in Fig. 2B). In an example, processes [4'] and [5'] (at operations 260 and 262) of Fig. 2B are performed instead of processes [4] and [5] (at operations 262 and 264) of Fig. 2A. That is, the background memory initialization (at operation 260), which is performed before booting to OS 230 (at operation 262), in example sequence flow 200B replaces, or is performed in lieu of, installation of the PRM handler (at operation 264), which is performed after booting to OS 230 (at operation 262), in example sequence flow 200A. Alternatively, in another example, the installation of the PRM handler (at operation 264) is performed as part of the background memory initialization (at operation 260). In some cases, the training and initialization of the local memory 225 (at operation 268) in example sequence flow 200A is also performed as part of the background memory initialization (at operation 260), and as such is not performed at the post OS boot phase 266. In examples, the BIOS 220 performs the background memory initialization by using at least one CPU core among a plurality of CPU cores used by the OS 230 (and notifying the OS 230 that it is using the at least one CPU core to perform background memory initialization). If not notified, the OS 230 detects missing CPU threads or CPU threads that are not available, and may cause a system crash.

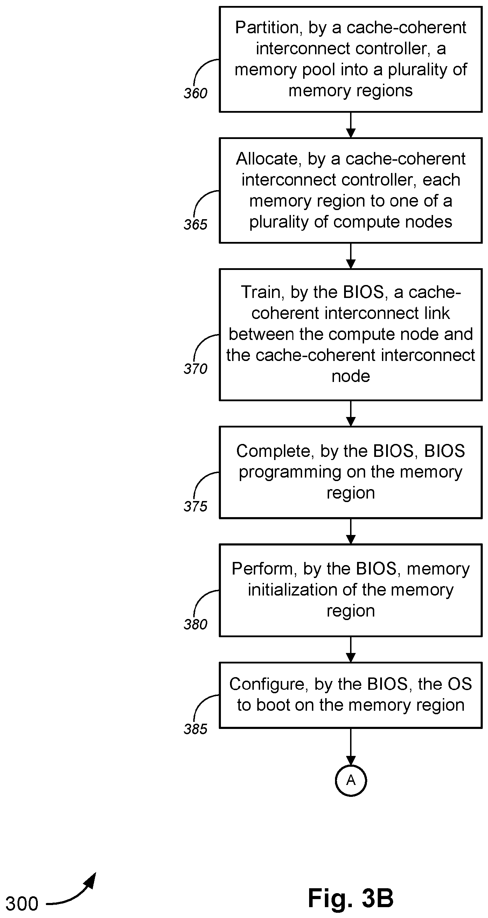

With reference to Figs. 3A, 3B and, 4, the operations of example methods 300 and 400 may be performed by a BIOS (e.g., BIOS 135 or 220 of Fig. 1 or 2A-2B), an OS (e.g., OS 130 or 230 of Fig. 1 or 2A-2B), and/or a cache-coherent interconnect controller or cache-coherent interconnect node (e.g., multi-port controller & switch 145 or cache-coherent interconnect node 210 of Fig. 1 or 2A-2B).

Figs. 3A and 3B depict an example method 300 for implementing server fast boot using cache-coherent interconnect memory. Method 300 of Fig. 3B continues onto Fig. 3A following the circular marker denoted, "A."

In the example of Fig. 3A, method 300, at operation 305, includes configuring, by a BIOS of a compute node among a plurality of compute nodes, a system address memory table associated with an OS of the compute node. In some examples, configuring the system address memory table (at operation 305) includes mapping a local memory of the compute node to a memory region among a plurality of memory regions of a memory pool in a cache-coherent interconnect node that is communicatively coupled to the compute node (or to the plurality of compute nodes) (at operation 310). The memory region is pre-allocated to the compute node. In examples, the plurality of compute nodes and the cache-coherent interconnect node are disposed on an equipment rack (such as shown, e.g., in Fig. 1, in which compute nodes 115a-115h and cache-coherent interconnect node 120 are disposed on the same rack 105). At operation 315, the BIOS boots the OS in the memory region. At operation 320, the OS executes workloads of the compute node using the memory region. Concurrent with the OS executing workloads of the compute node using the memory region, the BIOS trains and initializes the local memory of the compute node (at operation 325). In some examples, the training and initialization of the local memory (at operation 325) are performed during reboot of the compute node for one of firmware updates, disaster recovery from power loss, or after restart of the first compute node. In the case of firmware updates (such as updates to an entire HPM firmware), rebooting of the entire HPM firmware also occurs concurrent with training and initialization of the local memory and/or concurrent with OS boot and OS execution of workloads. In examples, the BIOS provides a PRM handler to the OS of the compute node (at operation 330). At operation 335, after training and initialization of the local memory have been completed, the BIOS notifies the OS of the compute node that the lol memory of the compute node is ready to handle workload execution. In an example, notifying the OS (at operation 335) includes sending a notification to the OS, the notification indicating that the local memory is ready to handle workload execution and triggering migration of at least some of contents of the memory region to the local memory. In an example, notifying the OS (at operation 335) includes notifying the OS using an interrupt.

At operation 340, the OS receives the notification from the BIOS. At operation 345, the OS maps the local memory, after being trained and initialized, into a system address memory table, by invoking the PRM handler (provided at operation 330). At operation 350, the OS migrates the at least some of the contents of the memory region to the local memory, based on the mapping. After migrating the at least some of the contents of the memory region to the local memory, the OS either executes the workloads of the compute node using the memory region (at operation 355a) or executes the workloads of the compute node using a combination of the local memory and the memory region (at operation 355b).

Referring to Fig. 3B, method 300, at operation 360, further includes a cache-coherent interconnect controller partitioning the memory pool into the plurality of memory regions, and allocating each memory region to one of the plurality of compute nodes (at operation 365). At operation 370, the BIOS trains a cache-coherent interconnect link between the compute node and the cache-coherent interconnect node, and completes BIOS programming on the memory region (at operation 375). The BIOS performs memory initialization of the memory region (at operation 380), and configures the OS to boot on the memory region (at operation 385). Method 300 continues onto the process at operation 305 in Fig. 3A, following the circular marker denoted, "A."

Fig. 4 depicts another example method for implementing server fast boot using cache-coherent interconnect memory. In the example of Fig. 4, method 400, at operation 405, includes a cache-coherent interconnect controller or a cache-coherent interconnect node pre-allocating a portion (e.g., a memory region) of a shared memory of the cache-coherent interconnect node. At operation 410, a BIOS of a compute node of a plurality of compute nodes trains a cache-coherent interconnect link between the compute node and the cache-coherent interconnect node. In an example, the processes at operations 405 and 410 occur upon power-up of the cache-coherent interconnect node. In another example, the processes at operations 405 and 410 occur in response to receiving commands (such as from a BMC communicatively coupled to a NIC of the cache-coherent interconnect node, in some cases, relayed from an orchestrator in a control plane in a data center computing fabric (e.g., DC computing fabric 215 of Fig. 2A or 2B)). The BIOS sets up a memory region, which is pre-allocated to the compute node, for boot (at operation 415). At operation 420, the BIOS performs background memory initialization. The BIOS boots to an OS, by using the memory region (at operation 425). At operation 430, the OS downloads applications to ready the compute node to run workloads on the memory region, and executes workloads of the compute node using the memory region (at operation 435).

Concurrent with booting to the OS (at operation 425), downloading the applications (at operation 430), and/or executing the workloads (at operation 435), the BIOS trains and initializes the local memory (at operation 440). In examples, the training and initialization of the local memory are performed as background operations while the OS is booting in the memory region. At operation 445, after training and initialization of the local memory of the compute node have been completed, the BIOS notifies the OS of the compute node that the local memory of the compute node is ready to handle workload execution. The BIOS provides a PRM handler to the OS at the compute node (at operation 450). At operation 455, the OS receives the notification from the BIOS. At operation 460, the OS maps the local memory, after being trained and initialized, into a system address memory table, in some cases, by invoking the PRM handler. At operation 465, the OS migrates at least some of contents of the memory region to the local memory, based on the mapping (at operation 460). The OS executes the workloads of the compute node using either the local memory or a combination of the local memory and the memory region (at operation 470).

While the techniques and procedures in methods 300, 400 are depicted and/or described in a certain order for purposes of illustration, it should be appreciated that certain procedures may be reordered and/or omitted within the scope of various embodiments. Moreover, while the methods 300, 400 may be implemented by or with (and, in some cases, are described below with respect to) the systems, examples, or embodiments 100, 200A, and 200B of Figs. 1, 2A, and 2B, respectively (or components thereof), such methods may also be implemented using any suitable hardware (or software) implementation. Similarly, while each of the systems, examples, or embodiments 100, 200A, and 200B of Figs. 1, 2A, and 2B, respectively (or components thereof), can operate according to the methods 300, 400 (e.g., by executing instructions embodied on a computer readable medium), the systems, examples, or embodiments 100, 200A, and 200B of Figs. 1, 2A, and 2B can each also operate according to other modes of operation and/or perform other suitable procedures.

Systems and methods are provided for implementing server fast boot using cache-coherent interconnect memory. A cache-coherent interconnect node partitions a memory pool and pre-allocates a memory region of the memory pool to each compute node of a plurality of compute nodes. A basic input/output system ("BIOS") of a compute node maps a local memory of the compute node to a memory region that has been pre-allocated to the compute node. The BIOS boots an operating system ("OS") of the compute node in the memory region. Concurrent with the OS executing workloads using the memory region, the BIOS trains and initializes the local memory, after completion of which the BIOS notifies the OS that the local memory is ready. The OS migrates contents from the memory region to the local memory, and subsequently executes the workload from the local memory or a combination of the local memory and the memory region.

The computer-implemented method described herein may further comprise: providing, by the first BIOS, a platform runtime mechanism ("PRM") handler to the first OS; after booting in the first memory region, executing, by the first OS, the workloads of the first
compute node using the first memory region;
receiving, by the first OS, the notification from the first BIOS;
mapping, by the first OS, the first local memory, after being trained and initialized, into the first system address memory table, by invoking the PRM handler; and
migrating, by the first OS, the at least some of the contents of the first memory region to the first local memory, based on the mapping.

The computer-implemented method may further comprise:
after migrating the at least some of the contents of the first memory region to the first local memory, executing, by the first OS, the workloads of the first compute node using a combination of the first local memory and the first memory region.

In some examples there is a system, comprising:
a first compute node among a plurality of compute nodes, the first compute node comprising:
a first basic input/output system ("BIOS");
a first operating system ("OS"); and
a first local memory; and
wherein the first compute node performs first operations comprising:
   configuring, by the first BIOS, a first system address memory table associated with the first OS, by mapping the first local memory to a first memory region among a plurality of memory regions of a memory pool in a cache-coherent interconnect node that is communicatively coupled to the plurality of compute nodes, the first memory region being pre-allocated to the first compute node;
   booting, by the first BIOS, the first OS in the first memory region;
   executing, by the first OS, workloads of the first compute node using the first memory region; concurrent with the first OS executing the workloads of the first compute node using the first memory region, training and initializing, by the first BIOS, the first local memory; and
   after training and initialization of the first local memory have been completed, sending, by the first BIOS, a notification to the first OS, the notification indicating that the first local memory is ready to handle workload execution;
   receiving, by the first OS, the notification from the first BIOS;
   mapping, by the first OS, the first local memory, after being trained and initialized, into the first system address memory table; and migrating, by the first OS, at least some of contents of the first memory region to the first local memory, based on the mapping.

The system may be wherein the first operations further comprise:
training, by the first BIOS, a first cache-coherent interconnect link between the first compute node and the cache-coherent interconnect node;
completing, by the first BIOS, BIOS programming on the first memory region;
performing, by the first BIOS, memory initialization of the first memory region; and
configuring, by the first BIOS, the first OS to boot on the first memory region.

The system may be, wherein the first operations further comprise:
after migrating the at least some of the contents of the first memory region to the first local memory, executing, by the first OS, the workloads of the first compute node using a combination of the first local memory and the first memory region.

As should be appreciated from the foregoing, the present technology provides multiple technical benefits and solutions to technical problems. For instance, running servers in a data center to implement cloud computing, AI tasks, or other process heavy tasks for a plurality of requesting devices or entities (e.g., users, companies, or agencies) necessitates periodic restarts due to critical firmware updates, disaster recovery from power loss, and/or other situations. During such periodic restarts, local memory of the servers or compute nodes are also retrained. However, restarting and retraining the local memory of a data center results in a cumulative loss in compute capacity while the local memory is non-operation during restart and retraining. For example, on a 2-socket CPU design with 12-channel DDR memory, even with parallel memory initialization, the time required is around 10 - 12 minutes and increases as the number of memory channels increases. Extrapolating this time to a 100,000-node data center with 2 reboots, the data center loses the total cost of operation benefits of about 2 million minutes of cumulative compute time due to memory training time. Conventionally, due to architecture and/or protocols, memory training is limited to being performed on each of the memory channels sequentially, which contributes to the cumulative compute time losses. This significantly affects the operation of the compute nodes in the data center as a whole, which affects the efficiency and reliability of the data center.

The present technology provides for server fast boot using cache-coherent interconnect memory. By using pre-allocated memory regions in a shared cache-coherent interconnect memory pool in a cache-coherent interconnect node that is communicatively coupled with a plurality of compute nodes, as described in detail above with respect to the figures, the BIOS of a compute node is enabled to map a local memory of the compute node to a pre-allocated memory region that is reserved for the compute node and to configure a system address memory table associated with an OS of the compute node based on the mapping. The BIOS boots the OS in the pre-allocated memory region (e.g., via PXE boot from the pre-allocated memory region), and the OS executes workloads using the pre-allocated memory region. While the OS executes workloads using the pre-allocated memory region, the BIOS trains and initializes the local memory, after completion of which the BIOS notifies the OS, and the OS migrates at least some of the contents from the pre-allocated memory to the local memory. The OS then executes the workloads either from the local memory or from a combination of the local memory and the pre-allocated memory region. From the perspective of a requesting device or entity, there is no interruption in the workloads being executed by the OS on its behalf. In the manner described herein, aside from there being no perceivable interruption in workload execution from the perspective of the requesting device or entity, enhanced reliability of the compute nodes in the data center is improved, which results in reduced error rates by the compute nodes (and the local memory in particular). Efficiency of the overall system within the data center is improved as well, due to continued workload execution using the pre-allocated memory regions, resulting in minimal or no cumulative compute time losses due to memory training time. This approach is also highly scalable, which becomes more relevant as memory technology advances, such as with the introduction of DDR 5 or 6 or higher, and as a system-on-a-chip ("SOC") technology adds more memory channels.

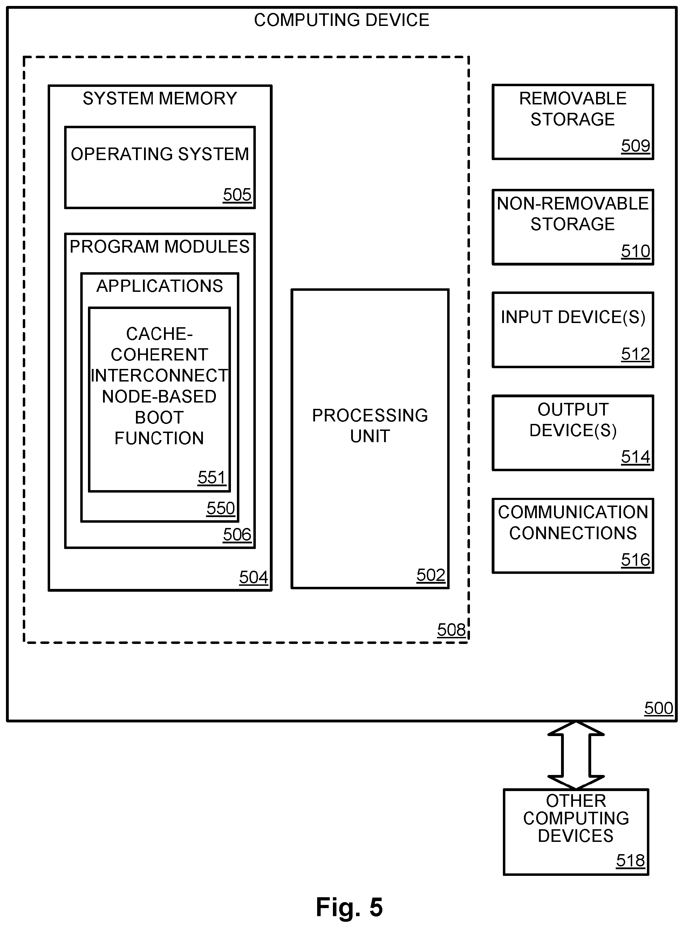

Fig. 5 depicts a block diagram illustrating physical components (i.e., hardware) of a computing device 500 with which examples of the present disclosure may be practiced. The computing device components described below may be suitable for a client device implementing the server fast boot using cache-coherent interconnect memory, as discussed above. In a basic configuration, the computing device 500 may include at least one processing unit 502 and a system memory 504. The processing unit(s) (e.g., processors) may be referred to as a processing system. Depending on the configuration and type of computing device, the system memory 504 may include volatile storage (e.g., random access memory), non-volatile storage (e.g., read-only memory), flash memory, or any combination of such memories. The system memory 504 may include an operating system 505 and one or more program modules 506 suitable for running software applications 550, such as cache-coherent interconnect node-based boot function 551, to implement one or more of the systems or methods described above.

The operating system 505, for example, may be suitable for controlling the operation of the computing device 500. Furthermore, aspects of the invention may be practiced in conjunction with a graphics library, other operating systems, or any other application program and is not limited to any particular application or system. This basic configuration is illustrated in Fig. 5 by those components within a dashed line 508. The computing device 500 may have additional features or functionalities. For example, the computing device 500 may also include additional data storage devices (which may be removable and/or non-removable), such as, for example, magnetic disks, optical disks, or tape. Such additional storage is illustrated in Fig. 5 by a removable storage device(s) 509 and a non-removable storage device(s) 510.

As stated above, a number of program modules and data files may be stored in the system memory 504. While executing on the processing unit 502, the program modules 506 may perform processes including one or more of the operations of the method(s) as illustrated in Figs. 3A-4, or one or more operations of the system(s) and/or apparatus(es) as described with respect to Figs. 1-2B, or the like. Other program modules that may be used in accordance with examples of the present disclosure may include applications such as electronic mail and contacts applications, word processing applications, spreadsheet applications, database applications, slide presentation applications, drawing or computer-aided application programs, AI applications and machine learning ("ML") modules on cloud-based systems, etc.

Furthermore, examples of the present disclosure may be practiced in an electrical circuit including discrete electronic elements, packaged or integrated electronic chips containing logic gates, a circuit utilizing a microprocessor, or on a single chip containing electronic elements or microprocessors. For example, examples of the present disclosure may be practiced via an SOC where each or many of the components illustrated in Fig. 5 may be integrated onto a single integrated circuit. Such an SOC device may include one or more processing units, graphics units, communications units, system virtualization units and various application functionalities all of which may be integrated (or "burned") onto the chip substrate as a single integrated circuit. When operating via an SOC, the functionality, described herein, with respect to generating suggested queries, may be operated via application-specific logic integrated with other components of the computing device 500 on the single integrated circuit (or chip). Examples of the present disclosure may also be practiced using other technologies capable of performing logical operations such as, for example, AND, OR, and NOT, including mechanical, optical, fluidic, and/or quantum technologies.

The computing device 500 may also have one or more input devices 512 such as a keyboard, a mouse, a pen, a sound input device, and/or a touch input device, etc. The output device(s) 514 such as a display, speakers, and/or a printer, etc. may also be included. The aforementioned devices are examples and others may be used. The computing device 500 may include one or more communication connections 516 allowing communications with other computing devices 518. Examples of suitable communication connections 516 include radio frequency ("RF") transmitter, receiver, and/or transceiver circuitry; universal serial bus ("USB"), parallel, and/or serial ports; and/or the like.

The term "computer readable media" as used herein may include computer storage media. Computer storage media may include volatile and nonvolatile, and/or removable and non-removable, media that may be implemented in any method or technology for storage of information, such as computer readable instructions, data structures, or program modules. The system memory 504, the removable storage device 509, and the non-removable storage device 510 are all computer storage media examples (i.e., memory storage). Computer storage media may include RAM, read-only memory ("ROM"), electrically erasable programmable read-only memory ("EEPROM"), flash memory or other memory technology, compact disk read-only memory ("CD-ROM"), digital versatile disks ("DVD") or other optical storage, magnetic cassettes, magnetic tape, magnetic disk storage or other magnetic storage devices, or any other article of manufacture which can be used to store information and which can be accessed by the computing device 500. Any such computer storage media may be part of the computing device 500. Computer storage media may be non-transitory and tangible, and computer storage media do not include a carrier wave or other propagated data signal.

Communication media may be embodied by computer readable instructions, data structures, program modules, or other data in a modulated data signal, such as a carrier wave or other transport mechanism, and may include any information delivery media. The term "modulated data signal" may describe a signal that has one or more characteristics that are set or changed in such a manner as to encode information in the signal. By way of example, communication media may include wired media such as a wired network or direct-wired connection, and wireless media such as acoustic, RF, infrared, and other wireless media.

In this detailed description, wherever possible, the same reference numbers are used in the drawing and the detailed description to refer to the same or similar elements. In some instances, a sub-label is associated with a reference numeral to denote one of multiple similar components. When reference is made to a reference numeral without specification to an existing sub-label, it is intended to refer to all such multiple similar components. In some cases, for denoting a plurality of components, the suffixes "a" through "n" may be used, where n denotes any suitable non-negative integer number (unless it denotes the number 14, if there are components with reference numerals having suffixes "a" through "m" preceding the component with the reference numeral having a suffix "n"), and may be either the same or different from the suffix "n" for other components in the same or different figures. For example, for component #1 X05a-X05n, the integer value of *n* in X05n may be the same or different from the integer value of *n* in X10n for component #2 X10a-X10n, and so on. In other cases, other suffixes (e.g., s, *t, u, v, w, x, y,* and/or *z*) may similarly denote non-negative integer numbers that (together with n or other like suffixes) may be either all the same as each other, all different from each other, or some combination of same and different (e.g., one set of two or more having the same values with the others having different values, a plurality of sets of two or more having the same value with the others having different values).

Unless otherwise indicated, all numbers used herein to express quantities, dimensions, and so forth used should be understood as being modified in all instances by the term "about." In this application, the use of the singular includes the plural unless specifically stated otherwise, and use of the terms "and" and "or" means "and/or" unless otherwise indicated. Moreover, the use of the term "including," as well as other forms, such as "includes" and "included," should be considered non-exclusive. Also, terms such as "element" or "component" encompass both elements and components including one unit and elements and components that include more than one unit, unless specifically stated otherwise.

In this detailed description, for the purposes of explanation, numerous specific details are set forth to provide a thorough understanding of the described embodiments. It will be apparent to one skilled in the art, however, that other embodiments of the present invention may be practiced without some of these specific details. In other instances, certain structures and devices are shown in block diagram form. While aspects of the technology may be described, modifications, adaptations, and other implementations are possible. For example, substitutions, additions, or modifications may be made to the elements illustrated in the drawings, and the methods described herein may be modified by substituting, reordering, or adding stages to the disclosed methods. Accordingly, the detailed description does not limit the technology, but instead, the proper scope of the technology is defined by the appended claims. Examples may take the form of a hardware implementation, or an entirely software implementation, or an implementation combining software and hardware aspects. Several embodiments are described herein, and while various features are ascribed to different embodiments, it should be appreciated that the features described with respect to one embodiment may be incorporated with other embodiments as well. By the same token, however, no single feature or features of any described embodiment should be considered essential to every embodiment of the invention, as other embodiments of the invention may omit such features. The detailed description is, therefore, not to be taken in a limiting sense.

Aspects of the present invention, for example, are described above with reference to block diagrams and/or operational illustrations of methods, systems, and computer program products according to aspects of the invention. The functions and/or acts noted in the blocks may occur out of the order as shown in any flowchart. For example, two blocks shown in succession may in fact be executed substantially concurrently or the blocks may sometimes be executed in the reverse order, depending upon the functionalities and/or acts involved. Further, as used herein and in the claims, the phrase "at least one of element A, element B, or element C" (or any suitable number of elements) is intended to convey any of: element A, element B, element C, elements A and B, elements A and C, elements B and C, and/or elements A, B, and C (and so on).

The description and illustration of one or more aspects provided in this application are not intended to limit or restrict the scope of the invention as claimed in any way. The aspects, examples, and details provided in this application are considered sufficient to convey possession and enable others to make and use the best mode of the claimed invention. The claimed invention should not be construed as being limited to any aspect, example, or detail provided in this application. Regardless of whether shown and described in combination or separately, the various features (both structural and methodological) are intended to be selectively rearranged, included, or omitted to produce an example or embodiment with a particular set of features. Having been provided with the description and illustration of the present application, one skilled in the art may envision variations, modifications, and alternate aspects, examples, and/or similar embodiments falling within the broader aspects of the general inventive concept embodied in this application that do not depart from the broader scope of the claimed invention.

## Claims

1. A system (100), comprising:
a plurality of compute nodes (115), each compute node comprising:
a basic input/output system ("BIOS") (135);
an operating system ("OS") (130); and
a local memory (140); and
a cache-coherent interconnect node (120) that is communicatively coupled to each of the plurality of compute nodes, the cache-coherent interconnect node comprising:
a cache-coherent interconnect memory including a memory pool (155) partitioned into a plurality of memory regions each pre-allocated to one of the plurality of compute nodes;
wherein the BIOS of a first compute node among the plurality of compute nodes performs first operations comprising:
configuring (305) a first system address memory table associated with the OS of the first compute node, by mapping the local memory of the first compute node to a first memory region among the plurality of memory regions of the memory pool, the first memory region being pre-allocated to the first compute node;
booting (315) the OS of the first compute node in the first memory region;
concurrent with the OS of the first compute node executing workloads of the first compute node using the first memory region, training and initializing (325) the local memory of the first compute node; and
after training and initialization of the local memory of the first compute node have been completed, notifying (335) the OS of the first compute node that the local memory of the first compute node is ready to handle workload execution and is ready for migration of contents of the first memory region to the local memory of the first compute node.

2. The system of claim 1, wherein the plurality of compute nodes and the cache-coherent interconnect node are disposed on an equipment rack.

3. The system of claim 1 or claim 2, wherein the training and initialization of the local memory of the first compute node are performed during reboot of the first compute node for one of firmware updates, disaster recovery from power loss, or after restart of the first compute node.

4. The system of claim 1 or claim 2, wherein the training and initialization of the local memory are performed as background operations while the OS is booting in the first memory region.

5. The system of any preceding claim, wherein the cache-coherent interconnect node further comprises:
a cache-coherent interconnect controller;
wherein the cache-coherent interconnect controller performs third operations comprising:
partitioning the memory pool into the plurality of memory regions; and
allocating each memory region to one of the plurality of compute nodes.

6. The system of any preceding claim, wherein the first operations further comprise:
training a first cache-coherent interconnect link between the first compute node and the cache-coherent interconnect node;
completing BIOS programming on the first memory region;
performing memory initialization of the first memory region; and
configuring the OS of the first compute node to boot on the first memory region.

7. The system of any preceding claim, wherein notifying the OS of the first compute node is performed using an interrupt.

8. The system of any preceding claim 1, wherein the first operations further comprise:
providing a platform runtime mechanism "PRM" handler to the OS of the first compute node.

9. The system of claim 8, wherein the OS of the first compute node performs second operations comprising:
after booting in the first memory region, executing the workloads of the first compute node using the first memory region;
after being notified by the BIOS of the first compute node, mapping the local memory of the first compute node, after being trained and initialized, into the first system address memory table, by invoking the PRM handler; and
migrating the contents of the first memory region to the local memory of the first compute node, based on the mapping.

10. The system of claim 9, wherein each compute node further comprises a plurality of compute cores, wherein a majority of compute cores are used by the OS to perform the second operations while some of the compute cores are used by the BIOS to perform the first operations.

11. The system of any preceding claim, wherein the BIOS of each of the plurality of compute nodes trains and initializes a corresponding local memory of a corresponding compute node concurrent with a corresponding OS executing workloads of that corresponding compute node using a corresponding one of the plurality of memory regions in the cache-coherent interconnect memory of the cache-coherent interconnect node.

12. A computer-implemented method (300), comprising:
configuring (305), by a first basic input/output system "BIOS" of a first compute node among a plurality of compute nodes, a first system address memory table associated with a first operating system "OS" of the first compute node, by mapping a first local memory of the first compute node to a first memory region among a plurality of memory regions of a memory pool in a cache-coherent interconnect node that is communicatively coupled to the plurality of compute nodes, the first memory region being pre-allocated to the first compute node;
booting (315), by the first BIOS, the first OS in the first memory region;
concurrent with the first OS executing workloads of the first compute node using the first memory region, training and initializing (325), by the first BIOS, the first local memory; and
after training and initialization of the first local memory have been completed, sending (335), by the first BIOS, a notification to the first OS, the notification indicating that the first local memory is ready to handle workload execution and triggering migration of at least some of contents of the first memory region to the first local memory.

13. The computer-implemented method of claim 12, wherein the training and initialization of the first local memory are performed during reboot of the first compute node for one of firmware updates, disaster recovery from power loss, or after restart of the first compute node.

14. The computer-implemented method of claim 12, wherein the training and initialization of the first local memory are performed as background operations while the first OS is booting in the first memory region.

15. A system (100), comprising:
a first compute node (115) among a plurality of compute nodes, the first compute node comprising:
a first basic input/output system "BIOS" (135);
a first operating system "OS" (130); and
a first local memory (140); and
wherein the first compute node performs first operations comprising:
configuring (305), by the first BIOS, a first system address memory table associated with the first OS, by mapping the first local memory to a first memory region among a plurality of memory regions of a memory pool in a cache-coherent interconnect node that is communicatively coupled to the plurality of compute nodes, the first memory region being pre-allocated to the first compute node;
booting (315), by the first BIOS, the first OS in the first memory region;
executing, by the first OS, workloads of the first compute node using the first memory region;
concurrent with the first OS executing the workloads of the first compute node using the first memory region, training and initializing (325), by the first BIOS, the first local memory; and
after training and initialization of the first local memory have been completed, sending (335), by the first BIOS, a notification to the first OS, the notification indicating that the first local memory is ready to handle workload execution;
receiving (340), by the first OS, the notification from the first BIOS;
mapping (345), by the first OS, the first local memory, after being trained and initialized, into the first system address memory table; and
migrating (350), by the first OS, at least some of contents of the first memory region to the first local memory, based on the mapping.
